# EUROPÄISCHE PATENTSCHRIFT

(11) **EP 0 964 895 B1**
(45) Veröffentlichungstag und Bekanntmachung des Hinweises auf die Patenterteilung: **19.05.2004**
(21) Anmeldenummer: 98910671.1
(22) Anmeldetag: 14.02.1998
(51) Int. Cl.: C09C 1/00, C09D 17/00, C09C 3/04, C09D 7/12, C09D 11/00, C08K 9/08

(54) **PIGMENTPRÄPARATION**
PIGMENT PREPARATION
PREPARATION DE PIGMENTS

(30) Priorität: 28.02.1997 DE 19708167
(43) Veröffentlichungstag der Anmeldung: 22.12.1999
(73) Patentinhaber: MERCK PATENT GmbH, 64271 Darmstadt (DE)
(72) Erfinder: HECHLER, Wolfgang, D-64686 Lautertal-Reichenbach (DE); HERGET, Gerhard, D-64372 Ober-Ramstadt (DE); HUSSEINI, Brigitte, D-64293 Darmstadt (DE)
(86) Internationale Anmeldenummer: PCT/EP1998/000850
(87) Internationale Veröffentlichungsnummer: WO 1998/038253

(56) Entgegenhaltungen:
- EP-A- 0 240 367
- EP-A- 0 256 418
- EP-A- 0 803 552
- FR-A- 2 354 300
- US-A- 5 104 922
- US-A- 5 618 342

## Beschreibung

Die Erfindung betrifft eine nichtstaubende, homogene Pigmentpräparation, die sich dadurch auszeichnet, daß sie mindestens 40 Gew.% eines oder mehrerer Effektpigmente enthält.

In technischen Prozessen werden Pigmente vielfach nicht als trockene Pulver eingesetzt, da diese stauben, was zu erhöhten Anforderungen im Hinblick auf die Arbeitsplatzsicherheit führt. Weiterhin wird bei der Einbringung von Pulvern in Kunststoffe, Basislacksysteme, etc. vielfach eine Agglomeration des Pigmentpulvers beobachtet. Eine homogene Verteilung des Pigments in der jeweiligen Matrix ist vielfach nur schwer oder aber gar nicht zu erreichen.

Anstelle des Pigmentpulvers werden nicht staubende Pigmentzubereitungen verwendet. Hierbei handelt es sich um
- rieselfähige Pulver, wobei Perlglanzpigmente mit Polymeren beschichtet werden, wie sie z.B. in der DE-PS-2603211 beschrieben sind,
- pigmentierte rieselfähige Pulver mit einem geringen Feuchtegehalt, wie sie z.B. aus der DE-OS-4139993 bekannt sind, oder um
- pigmentierte Pulver mit einem höheren Feuchtegehalt, wobei letztere häufig auch aufgrund ihrer fließfähigen Konsistenz als Pasten bezeichnet werden.

Pasten sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Zubereitung/Paste sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentzubereitungen eine hohe Stabilität aufweisen, d.h., sie dürfen nicht zur Phasenseparation neigen. Diese Forderung ist besonders wichtig bei Pigmentzubereitungen auf der Basis plättchenförmiger Pigmente, da diese auf Grund ihrer Struktur bei der Phasenseparation zum "Zusammenbacken" neigen und nur schwer wieder aufgerührt werden können. So weist z.B. eine wäßrige Pigmentzubereitung, welche durch Anteigen eines Pulvers aus Perlglanzpigmenten mit Wasser erhalten wird, häufig eine unzureichende Stabilität auf.

Wäßrige Pigmentzubereitungen, die schon immer z.B. für Kosmetika benötigt wurden, werden aus Umweltschutzgründen zunehmend auch für andere Applikationen, etwa für die Herstellung von Wasserlacken etc., bedeutsam.

Die bisher zur Verwendung in Beschichtungssystemen, insbesondere wäßrigen Systemen, entwickelten Zubereitungen mit Perlglanzpigmenten und Metalleffektpigmenten mit einem Pigmentanteil > 30 Gew.% genügen den beschriebenen Anforderungen nur unzureichend, insbesondere deshalb, da sie zur Scherverdickung neigen.

Die Aufgabe der vorliegenden Erfindung bestand daher in der Bereitstellung von Pigmentzubereitungen insbesondere in Form von Pasten, enthaltend mindestens 40 Gew.% an Effektpigmenten, die auch sehr gut in wäßrigen Beschichtungssystemen verwendet werden können, eine hohe Stabilität aufweisen und sich gleichzeitig durch eine hohe Kompatibilität mit den übrigen Komponenten des Beschichtungssystems auszeichnen. Weiterhin soll die erfindungsgemäße Pigmentpräparation auch zur Herstellung von Trockenpräparaten, z.B. in Form von Granulaten, geeignet sein.

Es wurde gefunden, daß diese Aufgabe durch die Bereitstellung der erfindungsgemäßen Pigmentpräparation gelöst werden kann. Gegenstand der Erfindung ist somit eine nichtstaubende, homogene Pigmentpräparation, die
- 40 - 60 Gew.% ein oder mehrerer Effektpigmente,
- 0,1 - 5 Gew.% an oberflächenaktiven Substanzen,
- 0,5 - 40 Gew.% an organischen Polymeren,
- 1 - 40 Gew.% eines organischen Lösungsmittels oder Lösungsmittelgemisches,
- 0 - 50 Gew.% Wasser und gegebenenfalls
- 0 - 10 Gew.% eines pH-Reglers
enthält.

Die erfindungsgemäße Präparation ist in Abhängigkeit vom Feuchtegehalt eine fließfähige Paste, die sich sehr gut zur Herstellung von Trockenpräparaten, z.B. Granulate, Pellets, Briketts, eignet. Die aus der erfindungsgemäßen Pigmentzubereitung hergestellten Trockenpräparate sind ebenfalls Gegenstand der Erfindung.

Als Perlglanzpigmente werden Pigmente auf der Basis plättchenförmiger, transparenter oder semitransparenter Substrate aus z.B. Schichtsilikaten, wie etwa Glimmer, synthetischen Glimmer, Talkum, Sericit, Kaolin, aus Glas oder anderen silikatischen Materialien verwendet, die mit farbigen oder farblosen Metalloxiden wie z. B. TiO₂, Fe₂O₃, Fe₃O₄, SnO₂, Cr₂O₃, ZnO, CuO, NiO und anderen Metalloxiden allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter der Marke Iriodin® der Fa. Merck KGaA, Darmstadt, BRD. Besonders bevorzugte Pigmentpräparationen enthalten TiO₂/Glimmer-, Fe₂O₃/Glimmer- und/oder TiO₂/Fe₂O₃-Glimmerpigmente.

Geeignete Metalleffektpigmente sind alle dem Fachmann bekannten plättchenförmigen Substrate, wie z.B. Aluminiumplättchen oder metalloxidbeschichtete Aluminiumplättchen, wie sie z.B. von der Fa. Eckart-Werke, Fürth, vertrieben werden.

Die erfindungsgemäßen Pigmentpräparationen können ein oder mehrere Effektpigmente enthalten. Vielfach können durch die Verwendung von mindestens zwei verschiedenen Perlglanzpigmenten besondere Farb- und Glanzeffekte erzielt werden. Die Pigmentpräparation kann auch ein Gemisch aus Perlglanz- und Metallpigment sein. Das Mischungsverhältnis liegt dann vorzugsweise bei 10:1, insbesondere bei 1:1. Bevorzugte Pigmentpräparationen enthalten ein oder mehrere Perlglanzpigmente.

Die erfindungsgemäße Pigmentpräparation enthält vorzugsweise 40 - 60 Gew.% an Effektpigmenten, insbesondere 45 - 60 Gew.%. Ganz besonders bevorzugt sind Pigmentpräparationen mit einem Gehalt an Effektpigmenten von mehr als 50 Gew.%.

Geeignete oberflächenaktive Substanzen sind insbesondere solche, die eine hydrophobe Molekülseitenkette enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyl-triethoxy-silan und n-Octyldecyl-triethoxy-silan (Si 116 bzw. Si 118 der Degussa AG, Frankfurt, BRD) sowie die entsprechenden Fluoralkylsilane.

Ferner werden als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt.

Geeignete Fluortenside bestehen aus einer längeren perfluor- oder teilfluorierten Alkylkette und einer hydrophilen oder organophilen Kopfgruppe, wie z. B. eine Polyoxyethylen-, Carboxyl- oder Sulfongruppe.

Sie sind kationisch, nicht-ionisch oder anionisch aufgebaut. Es kommen insbesondere Fluortenside zum Einsatz, die unter den Handelsnamen FLUORAD FC430 bzw. FC431 (Fa. 3M) und Borchigol FT448 (Fa. Borchers, Düsseldorf, BRD) vertrieben werden.

Vorzugsweise enthält die Pigmentpräparation ein Silan, ein Tensid oder eine Fettsäure. Bei dem oberflächenaktiven Reagenz kann es sich auch um ein Gemisch aus Silan, Fettsäuren und/oder Tensiden handeln. Der Anteil aller Verbindungen in der Präparation sollte allerdings 5 Gew.%, vorzugsweise 2 Gew.%, nicht überschreiten.

Die Pigmentpräparationen enthalten 0,1 bis 5 Gew.%, vorzugsweise 0,2 bis 3 Gew.% und insbesondere 0,5 bis 2 Gew.% an oberflächenaktiven Substanzen.

Als dritte zwingende Komponente enthält die erfindungsgemäße Pigmentpräparation 0,5 bis 40 Gew.%, vorzugsweise 1 bis 15 Gew.%, insbesondere 2 bis 10 Gew.% eines organischen Polymers oder Polymerengemisches.

Als organische Polymere kommen Verdickungsmittel, Dispergiermittel und/oder Bindemittelharze in Frage, wie sie üblicherweise den Farben und Lacken zugesetzt werden, wie sie z.B. in Karsten, Lackrohstofftabellen, 8. Auflage 1987, aufgeführt werden. Als Bindemittel kommen alle üblicherweise für Druckfarben in Frage kommenden Bindemittel bzw. Bindemittelgemische in Betracht, soweit diese gleich oder zumindest verträglich mit dem jeweils zum Einsatz kommenden Bindemittelsystem der Druckfarbe sind. Somit können Bindemittel auf der Basis von Cellulose, Polyacrylat-, Polymethacrylat, Alkyd-, Polyester-, Polyphenol-, Harnstoff-, Melamin-, Polyterpen-, Polyvinyl-, Polyvinylchlorid-, Polyvinylpyrrolidon-Harzen, Polystyrolen, Polyolefinen, Cumaron-Inden-, Kohlenwasserstoff-, Keton-, Aldehyd-, Aromaten-Formaldehyd-Harzen, Carbamidsäure-, Sulfonamid-, Epoxid-Harzen, Polyurethanen und/oder natürlichen Ölen oder Derivaten der genannten Substanzen eingesetzt werden. Eine besonders gute Redispergierbarkeit der erfindungsgemäßen Perlglanzpigment-Präparation hat sich gezeigt, wenn als Bindemittel Cellulose bzw. Celluloseverbindungen eingesetzt werden. Cellulose bzw. Celluloseverbindungen führen ersichtlich zu einer intensiven Vorbenetzung der Perlglanzpigment-Teilchen und ergeben damit ein Druckfarben-Vorprodukt, das sich wiederum in einer damit verträglichen Bindemittel-Lösung bei der Herstellung der Druckfarbe rasch dispergieren läßt. Dies gilt insbesondere für die Vorbenetzung mit Celluloseverbindungen, da diese offenbar einerseits die Bindung der an die Teilchen des Perlglanzpigments, andererseits die Bildung der Paste unterstützen, aus der durch Kompaktieren die Präparation in Teilchenform erzeugt wird.

Zu der Gruppe der Cellulose bzw. Celluloseverbindungen, die sich als besonders für das erfindungsgemäße Verfahren eignen, zählen Cellulosenitrat, Alkylcellulose, Hydroxicellulose, Hydroxialkylcellulose und Celluloseacetobutyrat. Bevorzugte organische Polymere sind weiterhin Polyacrylsäure-Derivate.

Geeignete Verdickungsmittel sind insbesondere solche, die die Dilatanz mindern, ohne gleichzeitig stark verdickend auf die Perlglanzzubereitung zu wirken, wie z.B. Acryl-Methacrylsäure-Polymerisate.

Die Auswahl des Bindemittels richtet sich nach den technologischen Anforderungen der zu erzeugenden Beschichtung. So können übliche Lackbindemittel, wie z.B. Polyurethan-Acrylat-Harze, Acrylat-Melamin-Harze, Alkydharze, Polyesterharze, Polyurethane, Acrylatharze oder Epoxidharze sowie deren Gemische als Bindemittel eingesetzt werden. Weiterhin geeignet sind Nitrocellulose, Celluloseacetopropionat, -butyrat, Ketonharze, Aldehydharze sowie Polyvinylbutyral.

Die Lösemittelkomponente in der erfindungsgemäßen Pigmentpräparation muß auf das jeweilige Bindemittel fachgemäß abgestimmt werden. Bei der Herstellung können alle organischen Lösemittel, vorzugsweise solche die mit Wasser emulgierbar oder mischbar sind, eingesetzt werden. Geeignete Lösemittel sind z.B. aromatische Lösungsmittel, z.B. Toluole, Benzine, Mineralöle, Kohlenwasserstoffe, Ester, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonoethylether, Propylenglycolmonoethylether oder Diole, wie z.B. Ethylenglykol und Propylenglykol oder Polyetherdiole, wie z.B. Polyethylenglykol und Polypropylenglykol, oder Polyole, wie z.B. alipathische Triole und Tetrole mit 2 bis 6 Kohlenstoffatomen, wie Trimethylolethan, Trimethylolpropan, Glycerin, 1,2,4-Butantriol, 1,2,6-Hexantinol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 8. Auflage 1987, aufgelistet sind. Insbesondere werden solche Lösungsmittel verwendet, die mit Wasser unbeschränkt mischbar sind.

Die erfindungsgemäße Pigmentpräparation enthält 1 bis 40 Gew.% eines organischen Lösemittels bzw. Lösemittelgemisches, vorzugsweise 5 bis 35 Gew.%, insbesondere 10 bis 30 Gew.%.

Vorzugsweise enthält die Pigmentpräparation als weitere Komponente 0 bis 50 Gew.% Wasser, vorzugsweise 5 bis 40 Gew.%, insbesondere 10 bis 30 Gew.%.

Abhängig von der Art des zugesetzten organischen Polymers ist der Zusatz von Neutralisationsmitteln erforderlich, aber auch unabhängig davon hat es sich bei der Herstellung der Pigmentpräparation häufig als vorteilhaft erwiesen, der Präparation einen pH-Regler zuzusetzen. Geeignet sind insbesondere die auf dem Lacksektor üblichen Basen, wie z.B. Harnstoff, Harnstoffderivate, Ammoniak, Aminoalkohole, Alkalihydroxide, wie z.B. KOH oder NaOH, Amine, wobei es sich bevorzugt um flüchtige organische niedermolekulare Amine handelt. Der pH-Wert kann auch durch die Zugabe von Mineralsäuren, wie z. B. H₂SO₄, HCl, HNO₃, oder organische Carbonsäuren, wie z. B Essigsäure, auf den gewünschten pH-Wert eingestellt werden.

Die Base bzw. Säure wird in einer derartigen Menge zugegeben, daß der pH-Wert der Präparation bei etwa 7,5 bis 10, vorzugsweise bei 7,5 bis 9, liegt.

In der Regel enthält die erfindungsgemäße Pigmentpräparation 0 bis 10 Gew.% eines pH-Reglers, vorzugsweise 1 bis 7 Gew.%, insbesondere 1,5 bis 3 Gew.%.

Der erfindungsgemäßen Pigmentpräparation können während oder nach der Herstellung weitere übliche Additive zugesetzt werden, wie z.B. Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.% enthalten sein können.

Die Herstellung der erfindungsgemäßen Pigmentpräparation erfolgt einfach dadurch, daß zu dem Effektpigment bzw. Effektpigmentgemisch, das Lösemittel, die oberflächenaktiven Substanzen, das organische Polymer bzw. Polymerengemisch gleichzeitig oder nacheinander hinzugegeben werden, und daß diese Mischung in einem Mischgerät, insbesondere einem Dispermaten, schonend homogenisiert wird.

Vorzugsweise wird das Pigment vorgelegt und zunächst unter Rühren mit dem Lösemittel enthaltend die oberflächenreaktive Substanz angeteigt; anschließend erfolgt die Zugabe einer weiteren Lösung bestehend aus Lösemittel und organischem Polymer. Gegebenenfalls kann an dieser Stelle bereits eine erste Trocknungsstufe eingeschaltet sein, wobei die Trocknungstemperatur zwischen 80° und 150° liegen kann. Bei Bedarf erfolgt abschließend die Zugabe weiterer lacktypischer Hilfsmittel.

Bei der erhaltenen erfindungsgemäßen Pigmentpräparation handelt es sich um gut fließfähige Pasten mit einem relativ hohem Gehalt an Perlglanzpigmenten. Aufgrund des geringen Gewichtsanteils an organischen Komponenten ist die erfindungsgemäße Pigmentpräparation gut kompatibel mit handelsüblichen System, sowohl auf wäßriger als auch auf Lösemittelbasis und sowohl für hydrophile als auch für hydrophobe Medien hervorragend geeignet. Weiterhin zeichnet sich die Präparation durch ihre Staubfreiheit, die gute Dispergierbarkeit und Redispergierbarkeit, eine hohe Lagerstabilität und eine gute Verarbeitbarkeit aus und ist somit herkömmlichen Pigmentpräparationen deutlich überlegen.

Die fließfähige Pigmentpräparation ist sehr gut geeignet für die Befüllung von Tuben sowie zum Strangpressen. Zur Herstellung von Trockenpräparaten wird die erfindungsgemäße Pigmentpräparation stranggepreßt oder auf anderen dem Fachmann bekannten Wegen in Granulatform verdichtet und gegebenenfalls anschließend getrocknet. Der Trocknungsprozeß findet in der Regel bei Temperaturen von 20 °C bis 150 °C und dauert zwischen 0,5 und 4 h und kann ggf. unter reduziertem Druck erfolgen. Zuletzt wird das gegebenenfalls Trockenpräparat zerkleinert. Die so erhaltenen Granulate sind ebenfalls nichtstaubend. Die Lagerung und der Transport der Trockenpräparate sind somit weniger eingeschränkt und daher sehr unproblematisch. Die Trockenpräparate besitzen den weiteren Vorteil, daß sie mit wenig oder keiner Flüssigkeit beladen sind und damit noch besser in Formulierungen eingearbeitet werden können.

Die erfindungsgemäße Präparation als Paste oder als Trockenpräparat kann für vielfältige Anwendungen verwendet werden. Bevorzugt wird sie in Beschichtungssystemen aus den Bereichen Druck, Lack und Farbe eingesetzt. Besonders bevorzugt wird die Präparation auf beliebige Substratmaterialien, beispielsweise Metalle wie Eisen, Stahl, Aluminium, Kupfer, Bronze, Messing sowie Metallfolien aber auch metallüberzogene Oberflächen von Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht. Ein weiteres wichtiges Applikationsgebiet sind daneben auch Wasserlacke.

Gegenstand der Erfindung ist somit auch die Verwendung der Pigmentpräparation in Formulierungen wie Farben, Lacken, Druckfarben und Kunststoffen.

Die nachfolgenden Beispiele sollen die Erfindung näher erläutern, ohne sie jedoch zu beschränken.

### Beispiele

### Beispiel 1

490 g Iriodin 103 Rutil Sterling Silver (TiO₂-Glimmerpigment mit einer Teilchengröße von 10 bis 50 µm der Fa. Merck KGaA, Darmstadt, BRD) werden in 30 ml VE-Wasser (mit Essigsäure auf pH = 4 eingestellt) suspendiert und zweimal 15 Minuten bei 2000 Upm an einem Dispermaten homogenisiert. Nach Zugabe von 30 g Ethanol und 10 g Si 118 (Fa. Degussa, BRD) wird die Suspension fünfmal 4 Minuten bei 2000 Upm homogenisiert. Das Pigment wird ausgetragen und 3,5 h bei 140 °C getrocknet.

Das Produkt wird durch ein 50 µm Sieb gegeben und anschließend homogen in 600 g einer Lösung bestehend aus 96,7 g Rohagit SD 15 (ein Polyacrylat der Fa. Röhm, Darmstadt, BRD), 203 g VE-Wasser und 300 g Ethanol eingetragen und mit 1,25 g Ammoniak (ca. 25 Gew.%) unter Rühren versetzt. Man erhält eine gut fließfähige Paste, die sich leicht aus einer Tube pressen läßt. Der Pigmentgehalt beträgt 44,5 Gew.%.

### Beispiel 2

323 g Iriodin 103 Rutil Sterlin Silver (TiO₂-Glimmerpigment mit einer Teilchengröße von 10 bis 50 µm der Fa. Merck KGaA, Darmstadt, BRD) werden mit 20 g VE-Wasser (mit Essigsäure auf pH = 4 eingestellt) versetzt und zweimal 15 Minuten bei 2000 Upm an einem Dispermaten homogenisiert. Nach Zugabe von 7 g Si 118 (Fa. Degussa, BRD) und 20 g Ethanol noch fünfmal 4 Minuten bei 2000 Upm homogenisiert. Das Pigment wird ausgetragen und 3,5 h bei 140 °C getrocknet. Das Produkt wird durch ein 50 µm Sieb gegeben und anschließend homogen in 330 g einer Lösung bestehend aus 5 g Moviol CMBO 5500 (Polyethylenglycol der Fa. Hoechst AG, BRD), 163 g VE-Wasser und 167 g Ethanol eingetragen. Man erhält eine gut fließfähige Paste, die sich leicht aus einer Tube pressen läßt. Der Pigmentgehalt beträgt 48,6 Gew.%.

### Beispiel 3

666 g Iriodin 123 Hellglanzsatin (TiO₂-Glimmerpigment mit einer Teilchengröße von 5 bis 20 µm der Fa. Merck KGaA, Darmstadt, BRD) werden mit 42 g VE-Wasser (mit Essigsäure auf pH = 4 eingestellt) versetzt und zweimal 15 Minuten bei 2000 Upm an einem Dispermaten homogenisiert. Nach Zugabe von 14 g Si 118 (Fa. Degussa, BRD) und 42 g Ethanol wird fünfmal 4 Minuten bei 2000 Upm homogenisiert. Das Pigment wird ausgetragen und 3,5 h bei 140 °C getrocknet. Das Produkt wird durch ein 50 µm Sieb gegeben und anschließend homogen in 600 g einer Lösung bestehend aus 104 g Rohagit SD 15 (Fa. Röhm, Darmstadt, BRD), 196 g VE-Wasser und 300 g Ethanol eingetragen und mit 1,8 g Ammoniak (c = 25 %) unter Rühren versetzt. Man erhält eine gut fließfähige Paste, die sich leicht aus einer Tube pressen läßt. Der Pigmentgehalt beträgt 52 Gew.%.

### Beispiel 4

594 g Iriodin 103 Rutil Sterling Silver (TiO₂-Glimmerpigment der Teilchengröße von 10 bis 50 µm der Fa. Merck KGaA, Darmstadt, BRD) werden mit 50 g VE-Wasser und 12 g FC 129 (Fa. 3M) versetzt und viermal 5 Minuten bei 800 Upm an einem Dispermaten homogenisiert. Das Pigment wird ausgetragen und 5 h bei 80 °C getrocknet. Das Produkt wird durch ein 50 µm Sieb gegeben und anschließend homogen in 600 g einer Lösung bestehend aus 96,7 g Rohagit SD 15 (Fa. Röhm, Darmstadt, BRD), 203 g VE-Wasser und 300 g Ethanol eingetragen und mit 1,25 g Ammoniak (c = 25 %) unter Rühren versetzt. Man erhält eine gut fließfähige Paste, die sich leicht aus einer Tube pressen läßt. Der Pigmentgehalt beträgt 49,5 Gew.%

## Patentansprüche

1. Nichtstaubende homogene Pigmentpräparation, **dadurch gekennzeichnet, daß** sie
- 40 - 60 Gew.% ein oder mehrerer Effektpigmente,
- 0,1 - 5 Gew.% an oberflächenaktiven Substanzen,
- 0,5 - 40 Gew.% an organischen Polymeren,
- 1 - 40 Gew.% eines organischen Lösungsmittels oder Lösungsmittelgemisches,
- 0 - 50 Gew.% Wasser und gegebenenfalls
- 0 - 10 Gew. % eines pH-Reglers
enthält.

2. Nichtstaubende homogene Pigmentpräparation nach Anspruch 1, **dadurch gekennzeichnet, daß** das Effektpigment ein Perlglanzpigment und/oder ein Metallpigment ist.

3. Nichtstaubende homogene Pigmentpräparation nach Anspruch 1 oder 2, **dadurch gekennzeichnet, daß** das Perlglanzpigment ein TiO₂/Glimmer- und/oder Fe₂O₃-Glimmerpigment ist.

4. Nichtstaubende homogene Pigmentpräparation nach Anspruch 1 oder 2, **dadurch gekennzeichnet, daß** das Metalleffektpigment Aluminiumplättchen oder metalloxidbeschichtete Aluminiumplättchen sind.

5. Nichtstaubende homogene Pigmentpräparation nach einem der Ansprüche 1 bis 4, **dadurch gekennzeichnet, daß** die oberflächenaktive Substanz ein Alkylsilan, eine gesättigte oder ungesättigte Fettsäure und/oder ein Fluortensid ist.

6. Nichtstaubende homogene Pigmentpräparation nach einem der Ansprüche 1 bis 5, **dadurch gekennzeichnet, daß** das organische Polymer ein Polyacrylsäure-Derivat ist.

7. Nichtstaubende homogene Pigmentpräparation nach einem der Ansprüche 1 bis 6, **dadurch gekennzeichnet, daß** als pH-Regler Ammoniak oder Harnstoff eingesetzt wird.

8. Nichtstaubende homogene Pigmentpräparation nach einem der Ansprüche 1 bis 7, **dadurch gekennzeichnet, daß** sie als zusätzliche Komponenten Entschäumer, Netzmittel, Antiabsetzmittel, Verlaufsmittel, Sikkative und/oder Thioxotropiermittel enthalten kann.

9. Verwendung der Pigmentpräparation nach Anspruch 1 zur Herstellung von Trockenpräparaten, **dadurch gekennzeichnet, daß** die Präparation stranggepreßt, gegebenenfalls anschließend getrocknet und zuletzt pelletiert wird.

10. Trockenpräparation hergestellt aus der nichtstaubenden homogenen Pigmentpräparation nach Anspruch 1, indem die Pigmentpräparation stranggepreßt, gegebenenfalls anschließend getrocknet und zuletzt pelletiert wird.

11. Verwendung der Pigmentpräparation nach Anspruch 1 in Formulierungen wie Farben, Lacken, Druckfarben und Kunststoffen.

## Claims

1. Non-dusting homogeneous pigment preparation, **characterised in that** it comprises
- 40 - 60 % by weight of one or more effect pigments,
- 0.1 - 5 % by weight of surface-active substances,
- 0.5 - 40 % by weight of organic polymers,
- 1-40 % by weight of an organic solvent or solvent mixture,
- 0 - 50 % by weight of water and optionally
- 0-10 % by weight of a pH regulator.

2. Non-dusting homogeneous pigment preparation according to Claim 1, **characterised in that** the effect pigment is a pearlescent pigment and/or a metal pigment.

3. Non-dusting homogeneous pigment preparation according to Claim 1 or 2, **characterised in that** the pearlescent pigment is a TiO₂/mica and/or Fe₂O₃/mica pigment.

4. Non-dusting homogeneous pigment preparation according to Claim 1 or 2, **characterised in that** the metal-effect pigment comprises aluminium flakes or metal oxide-coated aluminium flakes.

5. Non-dusting homogeneous pigment preparation according to one of Claims 1 to 4, **characterised in that** the surface-active substance is an alkylsilane, a saturated or unsaturated fatty acid and/or a fluoro-surfactant.

6. Non-dusting homogeneous pigment preparation according to one of Claims 1 to 5, **characterised in that** the organic polymer is a polyacrylic acid derivative.

7. Non-dusting homogeneous pigment preparation according to one of Claims 1 to 6, **characterised in that** the pH regulator employed is ammonia or urea.

8. Non-dusting homogeneous pigment preparation according to one of Claims 1 to 7, **characterised in that** it can comprise, as additional components, antifoams, wetting agents, antisettling agents, flow control agents, siccatives and/or thixotropic agents.

9. Use of the pigment preparation according to Claim 1 for the preparation of dry preparations, **characterised in that** the preparation is extruded, optionally subsequently dried and finally pelleted.

10. Dry preparation prepared from the non-dusting homogeneous pigment preparation according to Claim 1 in that the pigment preparation is extruded, optionally subsequently dried and finally pelleted.

11. Use of the pigment preparation according to Claim 1 in formulations such as paints, coatings, printing inks and plastics.

## Revendications

1. Préparation de pigment homogène sans formation particulaire, **caractérisée en ce qu'**elle comprend :
- 40 - 60 % en poids d'un ou plusieurs pigments d'effet,
- 0.1 - 5 % en poids de substances tensioactives,
- 0.5 - 40 % en poids de polymères organiques,
- 1 - 40 % en poids d'un solvant organique ou d'un mélange de solvants,
- 0 - 50 % en poids d'eau et optionnellement
- 0 - 10 % en poids d'un régulateur de pH.

2. Préparation de pigment homogène sans formation particulaire selon la revendication 1, **caractérisée en ce que** le pigment d'effet est un pigment perlé et/ou un pigment métallique.

3. Préparation de pigment homogène sans formation particulaire selon la revendication 1 ou 2, **caractérisée en ce que** le pigment perlé est un pigment de TiO₂/mica et/ou de Fe₂O₃/mica.

4. Préparation de pigment homogène sans formation particulaire selon la revendication 1 ou 2, **caractérisée en ce que** le pigment d'effet métallique comprend des flocons d'aluminium ou des flocons d'aluminium revêtus d'oxyde métallique.

5. Préparation de pigment homogène sans formation particulaire selon l'une quelconque des revendication 1 à 4, **caractérisée en ce que** la substance tensioactive est un alkylsilane, un acide gras saturé ou non saturé et/ou un agent de surface fluoré.

6. Préparation de pigment homogène sans formation particulaire selon l'une quelconque des revendication 1 à 5, **caractérisée en ce que** le polymère organique est un dérivé acide polyacrylique.

7. Préparation de pigment homogène sans formation particulaire selon l'une quelconque des revendication 1 à 6, **caractérisée en ce que** le régulateur de pH employé est de l'ammoniaque ou de l'urée.

8. Préparation de pigment homogène sans formation particulaire selon l'une quelconque des revendication 1 à 7, **caractérisée en ce qu'**elle peut comprendre, en tant que composants additionnels, des anti-mousse, des agents de mouillage, des agents suspenseurs, des agents de contrôle de fluage, des agents siccatifs et/ou thixotropes.

9. Utilisation de la préparation de pigment selon la revendication 1 pour la préparation de préparations sèches, **caractérisée en ce que** la préparation de pigment est extrudée, optionnellement ensuite séchée et pour finir mise en pastilles.

10. Préparation sèche préparée à partir de la préparation de pigment homogène sans formation particulaire selon la revendication 1, dans laquelle la préparation de pigment est extrudée, optionnellement ensuite séchée et pour finir mise en pastilles.

11. Utilisation de la préparation de pigment selon la revendication 1 selon des formulations telles que des peintures, des revêtements, des encres d'impression et des plastiques.
